# EUROPEAN PATENT SPECIFICATION

(11) **EP 3 741 806 B1**
(45) Date of publication and mention of the grant of the patent: **07.01.2026**
(21) Application number: 18901650.4
(22) Date of filing: 08.11.2018
(51) Int. Cl.: C08L 53/00, H01B 3/30, C08L 23/16, C08F 297/08, C08L 23/12

(54) **POLYOLEFIN RESIN COMPOSITION FOR ELECTRIC WIRE INSULATION**
POLYOLEFINHARZZUSAMMENSETZUNG FÜR ELEKTRISCHE DRAHTISOLIERUNG
COMPOSITIONS DE RÉSINE DE POLYOLÉFINE POUR ISOLATION DE FIL ÉLECTRIQUE

(30) Priority: 16.01.2018 KR 20180005376
(43) Date of publication of application: 25.11.2020
(73) Proprietor: Hanwha TotalEnergies Petrochemical Co., Ltd., Seosan-si, Chungcheongnam-do 31900 (KR)
(72) Inventor: LEE, Eunwoong, Seosan-Si Chungcheongnam-do 31900 (KR); KIM, Bongseock, Seosan-Si Chungcheongnam-do 31900 (KR); CHUN, Yongsung, Seosan-Si Chungcheongnam-do 31900 (KR)
(74) Representative: dompatent
(86) International application number: PCT/KR2018/013502
(87) International publication number: WO 2019/143007

(56) References cited:
- EP-A1- 2 947 118
- EP-B1- 0 204 400
- JP-A- H02 195 603
- KR-A- 20150 135 730
- US-A- 3 478 128
- US-A- 5 045 589
- US-A1- 2016 152 810
- ELASTOMER POLYOLEFIN: "Technical Information ENGAGE(TM)8200", 30 November 2000 (2000-11-30), XP055851511, Retrieved from the Internet <URL:https://www.dow.com/en-us/document-viewer.html?ramdomVar=3172048306986508716&docPath=/content/dam/dcc/documents/en-us/productdatasheet/400/400-00030962en-engage-8200-tds.pdf#language> [retrieved on 20211014]
- SHENOY & D R SAINI A V: "Melt Flow Index : more than just a quality control rheological parameter. Part 1", vol. 6, no. 1, 1 January 1986 (1986-01-01), pages 1 - 58, XP002622003, ISSN: 0730-6679, Retrieved from the Internet <URL:http://onlinelibrary.wiley.com/doi/10.1002/adv.1986.060060101/pdf> [retrieved on 19860101]
- MARKUS GAHLEITNER ET AL: "Heterophasic copolymers of polypropylene: Development, design principles, and future challenges", JOURNAL OF APPLIED POLYMER SCIENCE, vol. 130, no. 5, 28 June 2013 (2013-06-28), US, pages 3028 - 3037, XP055281631, ISSN: 0021-8995, DOI: 10.1002/app.39626

## Description

### Technical Field

The present invention relates to a polyolefin resin composition having improved softness suitable for electric cables for power transmission and distribution. More specifically, the present invention relates to a polyolefin resin composition having excellent impact resistance at low temperatures, mechanical and insulation characteristics, and improved softness. Since it can be used as an insulation material for electric cables without being crosslinked, it is recyclable.

### Background Art

As a material for insulation layers of common electric power cables, a polyethylene, an ethylene-propylene rubber copolymer (EPR), an ethylene-propylene-diene rubber copolymer (EPDM), or the like is used as crosslinked in order to maintain the mechanical and electrical characteristics at the operating temperature (90 to 110°C) of high-voltage cables.

However, it is difficult for the crosslinked polymers as mentioned above to be recycled when they have reached their service lives. Thus, they must be incinerated or disposed of, or additional costs are to be incurred due to separate facilities required for recycling them. In addition, there are several disadvantages in that environmental contamination is likely to occur due to the crosslinked by-products generated in the crosslinking step, that a drying step of the product is further required in the case of moisture curing, and that the processability of the product is limited when the crosslinking is excessive due to the heat generated during extrusion.

Meanwhile, since polypropylene is excellent in mechanical and barrier properties and has high thermal stability and since it is not necessary to be crosslinked, efforts have been made to use polypropylene as an insulation material for electric cables. If polypropylene is used, the operating temperature of high-voltage cables can be raised to 110 to 130°C, whereby it is possible to transmit current at higher rates. On the other hand, polypropylene has poor resistance to low temperatures, high rigidity, and low flexibility, and a cable may be broken during installation.

Therefore, studies have been made to secure the thermal resistance of a polypropylene resin and to concurrently improve the softness and the resistance to low temperatures. For example, U.S. Patent No. 9,416,207 discloses a polypropylene composition that is improved in softness and transparency, in which the composition is prepared by sequentially reacting three types of propylene rubber copolymers. However, since this composition has little improvement in low-temperature impact strength, it is not suitable for the use in electric cables as the cables may be broken when they are laid outdoors or while they are installed or transported depending on the weather. Further, the composition has a low melting point, which lowers the thermal resistance thereof. Thus, it is not suitable as an insulation material for electric cables.

Korean Laid-open Patent Publication No. 2014-0040082 discloses a thermoplastic polymer material in which a rubber phase made of an α-olefin comonomer is mixed with a propylene copolymer to secure the softness thereof. However, if the content of the rubber phase is low, it is difficult to lay and install an electric cable when it is used as an insulation material since the softness of the cable is deteriorated. If the content of the rubber phase is high, there is a problem that the advantages of polypropylene, which have a significant impact on the mechanical properties of an electric cable, are compromised.

In addition, Korean Laid-open Patent Publication No. 2014-0102407 discloses a technique on an insulation layer of electric power cables having improved insulation characteristics and being recyclable by adding an insulation fluid to polypropylene. Korean Laid-open Patent Publication No. 2014-0053204 discloses an electric power cable that employs an insulation layer comprising a polypropylene resin with an organic nucleating agent to reduce the crystal size. However, since a large amount of rubber is additionally compounded in order to resolve the problem of low flexibility caused by the high rigidity of polypropylene, the physical properties may be partially deteriorated due to nonhomogeneous compounding. The organic nucleating agent added to reduce the crystal size causes a cost increase and adverse effects. Thus, the use of polypropylene in an insulation layer of electric power cables is in need of improvement.

Further, Korean Patent No. 0246138 discloses a polypropylene resin composition having improved durability, impact resistance, and low-temperature impact resistance in which the composition is composed of a polypropylene and an ethylene-propylene copolymer resin or an ethylene-α-olefin copolymer rubber. But it is silent on the actual results of low-temperature impact resistance tests at -40°C; and as the content of the ethylene-propylene rubber or ethylene-α-olefin rubber increases to ensure softness for the application to electric cables, it is not suitable as a material for electric cables due to poor tensile characteristics, mechanical properties, and heat deformation. US 2016/152810 A1 discloses heterophasic propylene copolymers in which the rubber phase has a defined glass transition temperature and its use in cables.

### Detailed Description of the Invention

### Technical Problem

Accordingly, an object of the present invention is to provide a polyolefin resin composition for insulating electric cables to resolve this problem and an electric power cable comprising an insulation layer prepared therefrom. More specifically, it aims to provide a polyolefin resin composition having excellent heat deformation and low-temperature impact resistance characteristics, good dielectric breakdown strength, especially excellent flexibility by virtue of improved softness, and excellent volume resistance, whereby it can be used as a material for an insulation layer of electric cables without crosslinking thereof; and an electric power cable comprising an insulation layer prepared therefrom.

### Solution to Solve the Problem

According to an embodiment of the present invention to achieve the above object, there is provided a polyolefin resin composition, which comprises (A) 70 to 95% by weight of an ethylene-propylene block copolymer obtained by polymerization of a propylene homopolymer or an ethylene-propylene random copolymer with an ethylene-propylene rubber copolymer in stages in reactors; and (B) 5 to 30% by weight of an ethylene-propylene rubber copolymer, wherein the glass transition temperature of the rubber component in the ethylene-propylene block copolymer appears at -60 to -40°C as measured by a dynamic mechanical analyzer, the melt index of the polyolefin resin composition measured at 230°C under a load of 2.16 kg is 0.5 to 6.0 g/10 minutes, and the glass transition temperature of the rubber component in the polyolefin resin composition appears at -60 to -40°C as measured by a dynamic mechanical analyzer.

When the ethylene-propylene block copolymer (A) is extracted at room temperature with a xylene solvent, the content of the rubber component extracted is preferably 3 to 55% by weight, more preferably 5 to 45% by weight.

Preferably, the intrinsic viscosity of the rubber component extracted is 3.0 to 6.0 dl/g when measured in a decalin solvent at 135°C.

Preferably, the ethylene-propylene block copolymer (A) has a melting temperature (Tm) of 145 to 170°C.

Preferably, the melt index of the ethylene-propylene block copolymer (A) measured at 230°C under a load of 2.16 kg is 0.5 to 8.0 g/10 minutes.

Preferably, the content of ethylene is 5 to 25% by weight and the content of propylene is 75 to 95% by weight in the ethylene-propylene block copolymer (A).

Preferably, the content of ethylene is 7 to 20% by weight and the content of propylene is 80 to 93% by weight in the ethylene-propylene block copolymer (A).

The content of ethylene in the ethylene-propylene rubber copolymer resin (B) is preferably 5 to 25% by weight, more preferably 8 to 20% by weight.

Preferably, the polyolefin resin composition of the present invention comprises at least one additive selected from the group consisting of an antioxidant and a neutralizing agent.

Preferably, the content of the additive is 0.2 to 0.5% by weight based on the total weight of the polyolefin resin composition.

When the polyolefin resin composition is extracted at room temperature with a xylene solvent, the content of the rubber component extracted is preferably 30 to 50% by weight.

More preferably, the intrinsic viscosity of the rubber component extracted is 2.5 to 5.0 dl/g when measured in a decalin solvent at 135°C.

Preferably, the polyolefin resin composition of the present invention has a melting temperature (Tm) of 145 to 170°C.

Preferably, the polyolefin resin composition has a flexural modulus of 400 MPa or less, an elongation of 400% or more, and an impact resistance at -40°C of 5 kgf cm/cm or more.

According to another embodiment of the present invention, there is provided an electric power cable comprising an insulation layer prepared from the polyolefin resin composition of the present invention.

### Effects of the Invention

In the polyolefin resin composition of the present invention, the glass transition temperature of the rubber component thereof appears in the range of -60 to -40°C, whereby it is excellent in low-temperature impact resistance characteristics; and the melting temperature (Tm) thereof is 145 to 170°C, whereby it is excellent in thermal resistance. It is also excellent in heat deformation characteristics, good in dielectric breakdown characteristics, and excellent in softness. Thus, if it is used as a material for an insulation layer, it is capable of providing an electric power cable with excellent flexibility.

### Best Mode for Carrying Out the Invention

Hereinafter, the present invention will be described in more detail.

The polyolefin resin composition according to an embodiment of the present invention comprises (A) 70 to 95% by weight of an ethylene-propylene block copolymer obtained by polymerization of a propylene homopolymer or an ethylene-propylene random copolymer with an ethylene-propylene rubber copolymer in stages in reactors; and (B) 5 to 30% by weight of an ethylene-propylene rubber copolymer.

### (A) Ethylene-propylene block copolymer

The ethylene-propylene block copolymer (A) as a component that constitutes the polyolefin resin composition of the present invention is obtained by polymerization of a propylene homopolymer or an ethylene-propylene random copolymer with an ethylene-propylene rubber copolymer in stages in reactors.

The glass transition temperature (Tg) of the rubber component in the ethylene-propylene block copolymer (A) appears at -60 to -40°C as measured by a dynamic mechanical analyzer (DMA). In such a case, the low-temperature impact resistance measured at -40°C is excellent.

When the ethylene-propylene block copolymer (A) is extracted at room temperature with a xylene solvent, the content of the rubber component (i.e., solvent extract) extracted may be 3 to 55% by weight, preferably 5 to 45% by weight. If the content of the rubber component is less than 3% by weight, the strength is high, thereby lowering the flexibility. If the content of the rubber component exceeds 55% by weight, the heat deformation rate is high, and the tensile and elongational strength is low. Thus, it is not suitable for use in an electric cable.

The intrinsic viscosity of the rubber component extracted is 3.0 to 6.0 dl/g when measured in a decalin solvent at 135°C. If the intrinsic viscosity is less than 3.0 dl/g, the impact strength is not good. If it exceeds 6.0 dl/g, the rubber component may agglomerate and the size of the dispersed phase is increased, whereby bend whitening occurs, resulting in deterioration of the appearance.

In addition, the ethylene-propylene block copolymer (A) may have a melting temperature (Tm) of 145 to 170°C. If the melting temperature is lower than 145°C, the thermal resistance is not sufficient, so that the resin may be deformed by heat. Thus, it is not suitable for a high-voltage electric power cable whose operation temperature and instantaneous temperature are raised up to 130°C or higher.

In addition, the melt index of the ethylene-propylene block copolymer (A) measured at 230°C under a load of 2.16 kg may be 0.5 to 8.0 g/10 minutes. If the melt index of the ethylene-propylene block copolymer (A) is less than 0.5 g/10 minutes, the mixing of the polyolefin resin composition may not be smoothly carried out, and the flowability may be low, which may impair the productivity of cable processing. If the melt index exceeds 8.0 g/10 minutes, the flowability is high at the time of melting, which increases the probability of eccentricity in the cable processing.

The content of the ethylene-propylene block copolymer (A) in the polyolefin resin composition of the present invention is 70 to 95% by weight. If the content exceeds 95%, the softness may be reduced, thereby deteriorating the flexibility. If the content is less than 70%, the thermal resistance is reduced, and the heat deformation characteristics are deteriorated, so that the deformation of appearance may be aggravated in high-temperature operations.

Preferably, in the polyolefin resin composition of the present invention, the content of ethylene is 5 to 25% by weight and the content of propylene is 75 to 95% by weight in the ethylene-propylene block copolymer (A). More preferably, in the polyolefin resin composition of the present invention, the content of ethylene is 7 to 20% by weight and the content of propylene is 80 to 93% by weight in the ethylene-propylene block copolymer (A). If the content of ethylene is less than 5% by weight, a sufficient amount of a rubber copolymer is not synthesized, so that the softness of component (A) is significantly reduced, which may deteriorate the flexibility required to be applied as an insulation material of electric cables, which is an object of the present invention. On the other hand, if the content of ethylene exceeds 25% by weight, the melting point of the continuous phase is lowered by the ethylene remaining after the polymerization of the ethylene-propylene rubber, so that the thermal resistance of the entire resin composition may be deteriorated.

There is no particular limitation to the method of preparing the ethylene-propylene block copolymer (A) of the present invention. Any method of preparing an ethylene-propylene block copolymer known in the art to which the present invention pertains may be used as it is or as appropriately modified.

Preferably, the ethylene-propylene block copolymer may be prepared by a polymerization method known to those skilled in the art using Mitsui's Hypol process in which two bulk reactors and two gas-phase reactors are connected in series, and polymerization is continuously carried out therein.

Specifically, in the first- and second-stage reactors or in the first- to third-stage reactors, propylene alone is injected to produce a propylene homopolymer, or ethylene is additionally injected thereto to produce an ethylene-propylene random copolymer. In the polymerization of the ethylene-propylene random copolymer, the same amount of ethylene may be copolymerized in each polymerization reactor. In the fourth-stage reactor or in the third- and fourth-stage reactors, ethylene and propylene may be injected to polymerize an ethylene-propylene rubber, thereby obtaining the final ethylene-propylene block copolymer. The melt index of the resulting copolymer can be controlled by injecting hydrogen into each reactor.

In the above polymerization step, although a catalyst known in the art may be used without limitation thereto, it is preferable to use a Ziegler-Natta catalyst. In such an event, the catalyst may be prepared by reacting a titanium compound with a phthalate-based internal electron donor on a dialkoxy magnesium carrier. Further, it is preferable to use an organoaluminum compound (e.g., triethylaluminum) as a cocatalyst and a dialkyldialkoxysilane-based compound (e.g., dicyclopentyldimethoxysilane) as an external electron donor.

### (B) Ethylene-propylene rubber copolymer

The ethylene-propylene rubber copolymer (B) is another component that constitutes the polyolefin resin composition of the present invention.

The content of ethylene in the ethylene-propylene rubber copolymer (B) is 5 to 25% by weight, preferably 8 to 20% by weight. Specifically, the content of ethylene is 5 to 25% by weight, preferably 8 to 20% by weight, when the ethylene-propylene rubber copolymer (B) is measured by a Fourier transform infrared spectrometer. If the content of ethylene is less than 5% by weight, the ethylene-propylene rubber is crystallized to reduce the low-temperature impact strength of the polyolefin resin composition. If the content of ethylene exceeds 25% by weight, it is segregated from the heterophasic continuous phase of the ethylene-propylene block copolymer (A), thereby reducing the effect of improving the softness, and an interface is formed between the continuous phase and the rubber phase to reduce the volume resistance, so that the composition is not suitable for an insulation material.

The content of the ethylene-propylene rubber copolymer (B) in the polyolefin resin composition of the present invention is 5 to 30% by weight. If the content of the ethylene-propylene rubber copolymer (B) is less than 5% by weight, the softness is not sufficiently improved. If it exceeds 30% by weight, the rubber phase is increased to reduce the low-temperature impact resistance characteristics.

The ethylene-propylene rubber copolymer (B) as another component that constitutes the polyolefin resin composition of the present invention may be polymerized by additionally feeding ethylene in the presence of the ethylene-propylene block copolymer (A) in the gas-phase reactor(s) of the Hypol process. In such event, the polyolefin resin composition of the present invention can be obtained *in situ* in the Hypol process.

In another method, a commercially available ethylene-propylene rubber copolymer (B) may be blended with the ethylene-propylene block copolymer (A) obtained in the Hypol process, thereby preparing the polyolefin resin composition of the present invention. Examples of the ethylene-propylene rubber copolymer (B) commercially available include Versify (Dow), Vistamaxx (ExxonMobil), Tafmer (Mitsui), and KEP (Kumho Petrochemical). But it is not limited thereto.

There is no particular limitation to the method of blending the ethylene-propylene block copolymer (A) with a commercially available ethylene-propylene rubber copolymer (B) to prepare the polypropylene resin composition of the present invention. Any blending method known in the art to which the present invention pertains may be used as it is or as appropriately modified.

As a specific example, the resins described above and additives are supplied to a mixer such as a kneader, a roll, and a Banbury mixer, or a single- or twin-screw extruder in predetermined amounts, and they are then blended with this apparatus, thereby preparing the polyolefin resin composition of the present invention.

The polypropylene resin composition of the present invention may further comprise such an additive as an antioxidant, a neutralizing agent, and the like, in addition to the above-mentioned resin components, within a range that does not contradict the gist of the present invention.

For example, pentaerythritol tetrakis(3,5-di-t-butyl-4-hydroxyhydrocinnamate; Irganox 1010) manufactured by Ciba Specialty Chemicals may be used as an antioxidant, and hydrotalcite (Hycite 713) manufactured by Ciba Specialty Chemicals may be used as a neutralizing agent for removing any catalyst residues.

Preferably, the content of the additive may be 0.2 to 0.5% by weight based on the total weight of the polyolefin resin composition.

The polyolefin resin composition of the present invention has a melt index of 0.5 to 6.0 g/10 minutes when measured at 230°C under a load of 2.16 kg. If the melt index is less than 0.5 g/10 minutes, the extrusion temperature and the load increase, resulting in a lower productivity along with carbides. If it exceeds 6.0 g/10 minutes, an eccentricity occurs during extrusion, which is not preferable since the thickness uniformity of the cable is deteriorated.

The glass transition temperature of the rubber component in the polyolefin resin composition of the present invention appears at -60 to -40°C as measured by a dynamic mechanical analyzer. In such a case, the low-temperature impact resistance measured at -40°C is excellent.

When the polyolefin resin composition of the present invention is extracted at room temperature with a xylene solvent, the content of the rubber component (i.e., solvent extract) extracted may be 30 to 50% by weight. If the content of the rubber component is less than 30% by weight, the flexibility is reduced. If it exceeds 50% by weight, the heat deformation rate is high, and the tensile and elongational strength is low. Thus, it is not suitable for use in an electric cable.

The intrinsic viscosity of the rubber component extracted is 2.5 to 5.0 dl/g when measured in a decalin solvent at 135°C. If the intrinsic viscosity of the rubber component extracted is less than 2.5 dl/g, the impact strength is not good. If it exceeds 5.0 dl/g, the rubber component may agglomerate and the size of the dispersed phase is increased, whereby bend whitening occurs, resulting in deterioration of the appearance as well as a reduction in the flexibility.

In addition, the polyolefin resin composition of the present invention may have a melting temperature (Tm) of 145 to 170°C. If the melting temperature is lower than 145°C, the thermal resistance is not sufficient, so that the resin may be deformed by heat. Thus, it is not suitable for a high-voltage electric power cable whose operation temperature and instantaneous temperature are raised up to 130°C or higher.

Preferably, the polyolefin resin composition has a flexural modulus of 400 MPa or less, an elongation of 400% or more, and an IZOD impact resistance measured at - 40°C of 5 kgf cm/cm or more. If the flexural modulus is higher than 400 MPa, the flexibility is reduced, whereby the installability is deteriorated or the cable is hardly bent, making it difficult to store and transport the same. If the elongation is less than 400%, the insulation layer at the outermost portion of a cable bend may be broken. In addition, if the IZOD impact strength measured at -40°C is less than 5 kgf cm/cm, breakage may occur during installation and transportation in winter.

According to another embodiment of the present invention, there is provided an electric power cable comprising an insulation layer prepared from the polyolefin resin composition of the present invention.

The method for forming the insulation layer of an electric power cable from the polyolefin resin composition of the present invention is not particularly limited.

### Embodiments for Carrying Out the Invention

Hereinafter, the present invention is explained in detail with reference to the following examples and comparative examples. However, the following examples are intended to further illustrate the present invention. The scope of the present invention is not limited thereto only.

The resin components (A) and (B) used in the following examples and comparative examples were obtained in the following ways.

### Example 1

An ethylene-propylene block copolymer (A) was prepared in the presence of the catalyst in the Hypol process as described above. Here, the operating temperatures and pressures of the bulk reactors as the first- and second-stage reactors were in the range of 68 to 75°C and 30 to 40 kg/cm², and 68 to 75°C and 25 to 35 kg/cm², respectively. The operating temperatures and pressures of the gas-phase reactors as the third- and fourth-stage reactors were in the range of 75 to 82°C and 15 to 20 kg/cm², and 68 to 75°C and 10 to 17 kg/cm², respectively. An ethylene-propylene rubber copolymer (B) having the composition shown in Table 1 was used.

### Example 2

The contents of ethylene and propylene were changed under the same conditions as in Example 1 to obtain an ethylene-propylene block copolymer (A) having the composition of Table 1. An ethylene-propylene rubber copolymer (B) having the composition and properties shown in Table 1 was used.

### Example 3

The contents of ethylene and propylene were changed under the same conditions as in Example 1 to obtain an ethylene-propylene block copolymer (A) having the composition of Table 1. An ethylene-propylene rubber copolymer (B) having the composition and properties shown in Table 1 was used.

### Comparative Example 1

The ethylene-propylene block copolymer (A) obtained in Example 1 was charged to the fourth-stage gas-phase reactor, and an ethylene-propylene rubber copolymer (B) having a high content of ethylene was continuously polymerized.

### Comparative Example 2

The same ethylene-propylene block copolymer (A) as in Example 1 was used, and a resin (B) having the composition and properties shown in Table 1 was used.

### Comparative Example 3

Hanwha Total's ethylene-propylene random block copolymer CF309 was used as resin (A), and an ethylene-propylene rubber copolymer (B) having the composition and properties shown in Table 1 was used.

### Comparative Example 4

Hanwha Total's ethylene-propylene random block copolymer CF309 was used as resin (A), and an ethylene-propylene rubber copolymer (B) having the composition and properties shown in Table 1 was used.

### Comparative Example 5

The same ethylene-propylene block copolymer (A) as in Example 1 was used, and an ethylene-propylene rubber copolymer (B) having the composition and properties shown in Table 1 was used.

### Comparative Example 6

A crosslinked polyethylene (LS4201S, Borealis), which is commercially available for electric power cables, was used.

The physical properties of the compositions prepared in Examples 1 to 3 and Comparative Examples 1 to 5 were measured according to the following methods and standards. The results are shown in Table 1 below.

### (1) Melt index

Melt index was measured at 230°C under a load of 2.16 kg according to the ASTM D 1238 method.

### (2) Content of a solvent extract (or xylene soluble)

A polypropylene resin was dissolved in xylene at a concentration of 1% at 140°C for 1 hour and left at room temperature for 2 hours for extraction. The weight of the extract was measured and expressed in percent based on the total weight of the polypropylene resin.

### (3) Intrinsic viscosity of a solvent extract

The intrinsic viscosity of a solvent extract was measured in a decalin solvent at 135°C using a viscometer.

### (4) Melting temperature

A sample was kept isothermal at 200°C for 10 minutes in a differential scanning calorimeter (DSC; Q2000, TA Instrument) to remove the thermal history and then cooled from 200°C to 30°C at a rate of 10°C per minute for crystallization thereof to impart the same thermal history. Then, the sample was kept isothermal at 30°C for 10 minutes, followed by heating the sample at a rate of 10°C per minute. The melting temperature (Tm) was obtained from the peak temperature.

### (5) Glass transition temperature

In a dynamic mechanical analyzer (DMA; TA Instrument Q800), the temperature was raised from -140°C to 145°C at a rate of 2°C/min, and the glass transition temperature (Tg) of the rubber component was determined from the stress relaxation curve.

### (6) Flexural modulus (FM)

Flexural modulus was measured in accordance with the ASTM D 790 method.

### (7) Brittleness temperature test

Specimens having a length of 38 mm, a width of 6 mm, and a thickness of 2 mm were obtained by injection molding at 240°C. Five specimens were subjected to the brittleness temperature test -40°C in accordance with the KS C 3004 method to check the number of specimens broken. If the number of the broken specimens was 1 or less, it was evaluated as a pass. If the number of the broken specimens was greater than 1, it was evaluated as a failure.

### (8) Heat deformation

A specimen having a length of 30 mm, a width of 15 mm, and a thickness of 2 mm was prepared by injection molding at 240°C. According to the KS C IEC 60811-508 method, a load of 1.6 kg was applied to the specimen at 130°C for 6 hours, and the deformed thickness was measured. The deformation rate was obtained by dividing the deformed thickness by the initial thickness. If the heat deformation rate is less than 50%, it was evaluated as a pass. If the heat deformation rate is 50% or more, it was evaluated as a failure.

### (9) IZOD impact strength

IZOD impact strength was measured at -40°C in accordance with the ASTM D 256 method.

### (10) Elongation at break

Elongation at break was measured at 25 mm/minute in accordance with the IEC 60811-501 method.

### (11) Alternating current breakdown voltage

A polypropylene specimen was prepared as a sheet having a thickness of 200 µm using a laboratory extruder (HAAKE extruder). A crosslinked polyethylene (XLPE) specimen having a thickness of 200 µm was prepared by press molding at 180°C. Alternating current breakdown voltage was measured at room temperature using spherical electrodes having a diameter of 12.7 mm according to the ASTM D 149-92 method.

**[Table 1]**

| | | Example | | | Comparative Example | | | | | |
|---|---|---|---|---|---|---|---|---|---|---|
| | | 1 | 2 | 3 | 1 | 2 | 3 | 4 | 5 | |
| Resin | Melt index (g/10 min, 230°C) | 1.4 | 1.7 | 2.8 | 1.7 | 2.1 | 2.7 | 3.7 | 4.3 | |
| composition | Composition of component (A): | | 95 | 85 | 70 | 95 | 95 | 70 | 60 | 50 |
| | | Propylene content (wt. %) | 80 | 85 | 90 | 80 | 80 | 95 | 95 | 80 |
| | | Ethylene content (wt. %) | 20 | 15 | 10 | 20 | 20 | 5 | 5 | 20 |
| | | Solvent extract content (wt. %) | 41 | 32 | 26 | 41 | 41 | 15 | 15 | 40 |
| | | Intrinsic viscosity of solvent extract (dl/g) | 5.0 | 4.7 | 4.3 | 5.0 | 5.0 | 1.2 | 1.2 | 4.7 |
| | | Melting temp. (Tm; °C) | 151 | 151 | 162 | 151 | 151 | 151 | 151 | 151 |
| | | Glass transition temp. (°C) | -53 | -51 | -49 | -53 | -53 | -31 | -31 | -53 |
| | | Melt index (g/10 min, 230°C) | 1.3 | 1.5 | 3.1 | 1.3 | 1.3 | 5.3 | 5.3 | 1.4 |
| | Composition of component (B): | | 5 | 15 | 30 | 5 | 5 | 30 | 40 | 50 |
| | | Propylene content (wt. %) | 85 | 90 | 75 | 70 | 90 | 75 | 85 | 85 |
| | | Ethylene content (wt. %) | 15 | 10 | 25 | 30 | - | 25 | 15 | 15 |
| | | Octene content (wt. %) | - | - | - | - | 10 | - | - | - |
| | | Melting temp. (Tm; °C) | 50 | 70 | 160 | - | 50 | 160 | 50 | 60 |
| | | Melt index (g/10 min, 230°C) | 3.0 | 2.0 | 1.0 | - | 3.0 | 1.0 | 3.0 | 8.0 |
| | Solvent extract content (wt. %) | | 44 | 42 | 45 | 45 | 43 | 40 | 52 | 66 |
| | Intrinsic viscosity of solvent extract (dl/g) | | 4.8 | 3.6 | 4.4 | 4.3 | 3.5 | 2.3 | 2.2 | 3.2 |
| | Thermal behavior: | | | | | | | | | |
| | | Melting temp. (Tm; °C) | 152 | 151 | 161 | 152 | 151 | 162 | 163 | 151 |
| | | Glass transition temp. #1 (°C) | -31 | -30 | -33 | -30 | - | -30 | -28 | -30 |
| | | Glass transition temp. #2 (°C) | -53 | -52 | -48 | -53 | -51 | -47 | - | -52 |
| Physical properties of resin composition | Flexural modulus (MPa) | | 380 | 360 | 330 | 430 | 450 | 500 | 320 | 160 |
| | Brittleness temp. test (ea) | | 0 | 0 | 0 | 0 | 0 | 2 | 5 | 3 |
| | Heat deformation (%) | | 21 | 12 | 29 | 24 | 17 | 31 | 51 | 62 |
| | IZOD impact resistance (kgf cm/cm) | | 9 | 6 | 8 | 10 | 11 | 4 | 2 | 9 |
| | Elongation at break (%) | | 490 | 520 | 430 | 440 | 420 | 470 | 460 | 520 |

The polyolefin resin compositions prepared in the Examples, which fall within the scope of the present invention, had excellent characteristics since they were low in flexural modulus as a barometer of flexibility and excellent in low-temperature impact resistance, heat deformation, bend whitening, and elongation at break at the same time. In Comparative Examples 1 and 2, the flexural modulus was high, indicating low flexibility. In Comparative Example 3, the intrinsic viscosity of the solvent extract was low, indicating poor low-temperature impact resistance. In addition, in Comparative Examples 4 and 5, the content of the solvent extract was high, resulting in high heat deformation, so that it is not suitable as a material for cables.

In order to compare the insulation properties of the polyolefin resin compositions obtained in the Examples and the Comparative Examples, alternating current breakdown voltages were compared with reference to the crosslinked polyethylene. The results are shown in Table 2.

**[Table 2]**

| | Example 1 | Comparative Example 5 | Comparative Example 6 |
|---|---|---|---|
| Type of resin composition | Polyolefin composition | Polyolefin composition | Crosslinked polyethylene |
| Alternating current breakdown voltage (kV) | 65 | 51 | 64 |

The polyolefin resin composition obtained in Example 1 had a good alternating current breakdown voltage as compared with that of the crosslinked polyethylene currently commercially available for electrical power cables. In contrast, the polyolefin resin composition of the Comparative Example had a relatively inferior breakdown voltage.

### Industrial Applicability

In the polyolefin resin composition of the present invention, the glass transition temperature of the rubber component thereof appears in the range of -60 to -40°C, whereby it is excellent in low-temperature impact resistance characteristics; and the melting temperature (Tm) thereof is 145 to 170°C, whereby it is excellent in thermal resistance. It is also excellent in heat deformation characteristics, good in dielectric breakdown characteristics, and excellent in softness. Thus, if it is used as a material for an insulation layer, it is capable of providing an electric power cable with excellent flexibility.

## Claims

1. A polyolefin resin composition, which comprises (A) 70 to 95% by weight of an ethylene-propylene block copolymer obtained by polymerization of a propylene homopolymer or an ethylene-propylene random copolymer with an ethylene-propylene rubber copolymer in stages in reactors; and (B) 5 to 30% by weight of an ethylene-propylene rubber copolymer,
wherein the glass transition temperature of the rubber component in the ethylene-propylene block copolymer (A) appears at -60 to -40°C as measured by a dynamic mechanical analyzer, the melt index of the polyolefin resin composition measured at 230°C under a load of 2.16 kg is 0.5 to 6.0 g/10 minutes,
and the glass transition temperature of the rubber components (A, B) in the polyolefin resin composition appears at -60 to -40°C as measured by a dynamic mechanical analyzer.

2. The polyolefin resin composition of claim 1, wherein when the ethylene-propylene block copolymer (A) is extracted at room temperature with a xylene solvent, the content of the rubber component extracted is 3 to 55% by weight, preferably 5 to 45% by weight.

3. The polyolefin resin composition of claim 2, wherein the intrinsic viscosity of the rubber component extracted is 3.0 to 6.0 dl/g when measured in a decalin solvent at 135°C.

4. The polyolefin resin composition of claim 1, wherein the ethylene-propylene block copolymer (A) has a melting temperature (Tm) of 145 to 170°C.

5. The polyolefin resin composition of claim 1, wherein the melt index of the ethylene-propylene block copolymer (A) measured at 230°C under a load of 2.16 kg is 0.5 to 8.0 g/10 minutes.

6. The polyolefin resin composition of claim 1, wherein the content of ethylene is 5 to 25% by weight, preferably 7 to 20% by weight and the content of propylene is 75 to 95% by weight, preferably 80 to 93% by weight.in the ethylene-propylene block copolymer (A).

7. The polyolefin resin composition of claim 1, wherein the content of ethylene in the ethylene-propylene rubber copolymer resin (B) is 5 to 25% by weight, preferably 8 to 20% by weight.

8. The polyolefin resin composition of claim 1, which further comprises at least one additive selected from the group consisting of an antioxidant and a neutralizing agent.

9. The polyolefin resin composition of claim 8, wherein the content of the additive is 0.2 to 0.5% by weight based on the total weight of the polyolefin resin composition.

10. The polyolefin resin composition of claim 1, wherein when the polyolefin resin composition is extracted at room temperature with a xylene solvent, the content of the rubber component extracted is 30 to 50% by weight.

11. The polyolefin resin composition of claim 10, wherein the intrinsic viscosity of the rubber component extracted is 2.5 to 5.0 dl/g when measured in a decalin solvent at 135°C.

12. The polyolefin resin composition of claim 1, which has a melting temperature (Tm) of 145 to 170°C.

13. The polyolefin resin composition of claim 1, which has a flexural modulus (ASTM D 790 method) of 400 MPa or less, an elongation of 400% or more, (IEC 60811-501 method) and an impact resistance at -40°C of 5 kgf cm/cm or more. (ASTM D 256 method)

14. An electric power cable comprising an insulation layer prepared from the polyolefin resin composition of any one of claims 1 to 13.

## Patentansprüche

1. Polyolefinharzzusammensetzung, umfassend: (A) 70 bis 95 Gew.-% eines Ethylen-Propylen-Blockcopolymers, das durch Polymerisation eines Propylen-Homopolymers oder eines statistischen Ethylen-Propylen-Copolymers mit einem Ethylen-Propylen-Kautschuk-Copolymer in Stufen in Reaktoren erhalten wird; und (B) 5 bis 30 Gew.-% eines Ethylen-Propylen-Kautschuk-Copolymers,
wobei die Glasübergangstemperatur der Kautschukkomponente in dem Ethylen-Propylen-Blockcopolymer (A), wie sie mit einem dynamischen mechanischen Analysegerät gemessen wird, bei -60 bis -40°C erscheint, der Schmelzindex der Polyolefinharzzusammensetzung, wie er bei 230°C unter einer Last von 2,16 kg gemessen wird, 0,5 bis 6,0 g/10 Minuten beträgt
und die Glasübergangstemperatur der Kautschukkomponenten (A, B) in der Polyolefinharzzusammensetzung, wie sie mit einem dynamischen mechanischen Analysegerät gemessen wird, bei -60 bis -40°C erscheint.

2. Polyolefinharzzusammensetzung gemäß Anspruch 1, wobei dann, wenn das Ethylen-Propylen-Blockcopolymer (A) bei Raumtemperatur mit einem Xylol-Lösungsmittel extrahiert wird, der Gehalt an der extrahierten Kautschukkomponente 3 bis 55 Gew.-%, vorzugsweise 5 bis 45 Gew.-%, beträgt.

3. Polyolefinharzzusammensetzung gemäß Anspruch 2, wobei die Grenzviskositätszahl der extrahierten Kautschukkomponente 3,0 bis 6,0 dl/g beträgt, wenn in einem Decalin-Lösungsmittel bei 135°C gemessen wird.

4. Polyolefinharzzusammensetzung gemäß Anspruch 1, wobei das Ethylen-Propylen-Blockcopolymer (A) eine Schmelztemperatur (Tm) von 145 bis 170°C aufweist.

5. Polyolefinharzzusammensetzung gemäß Anspruch 1, wobei der Schmelzindex des Ethylen-Propylen-Blockcopolymers (A), wie er bei 230°C unter einer Last von 2,16 kg gemessen wird, 0,5 bis 8,0 g/10 Minuten beträgt.

6. Polyolefinharzzusammensetzung gemäß Anspruch 1, wobei in dem Ethylen-Propylen-Blockcopolymer (A) der Gehalt an Ethylen 5 bis 25 Gew.-%, vorzugsweise 7 bis 20 Gew.-%, beträgt und der Gehalt an Propylen 75 bis 95 Gew.-%, vorzugsweise 80 bis 93 Gew.-%, beträgt.

7. Polyolefinharzzusammensetzung gemäß Anspruch 1, wobei der Gehalt an Ethylen in dem Ethylen-Propylen-Kautschuk-Copolymerharz (B) 5 bis 25 Gew.-%, vorzugsweise 8 bis 20 Gew.-%, beträgt.

8. Polyolefinharzzusammensetzung gemäß Anspruch 1, weiterhin umfassend wenigstens ein Additiv, das aus der Gruppe ausgewählt ist, die aus einem Antioxidans und einem Neutralisationsmittel besteht.

9. Polyolefinharzzusammensetzung gemäß Anspruch 8, wobei der Gehalt an dem Additiv 0,2 bis 0.5 Gew.-% beträgt, bezogen auf das Gesamtgewicht der Polyolefinharzzusammensetzung.

10. Polyolefinharzzusammensetzung gemäß Anspruch 1, wobei dann, wenn die Polyolefinharzzusammensetzung bei Raumtemperatur mit einem Xylol-Lösungsmittel extrahiert wird, der Gehalt an der extrahierten Kautschuckomponente 30 bis 50 Gew.-% beträgt.

11. Polyolefinharzzusammensetzung gemäß Anspruch 10, wobei die Grenzviskositätszahl der extrahierten Kautschukkomponente 2,5 bis 5,0 dl/g beträgt, wenn in einem Decalin-Lösungsmittel bei 135°C gemessen wird.

12. Polyolefinharzzusammensetzung gemäß Anspruch 1, die eine Schmelztemperatur (Tm) von 145 bis 170°C aufweist.

13. Polyolefinharzzusammensetzung gemäß Anspruch 1, die einen Biegemodul (Methode ASTM D 790) von 400 MPa oder weniger, eine Dehnung von 400% oder mehr (Methode IEC 60811-501) und eine Schlagfestigkeit bei -40°C von 5 Kilopond·cm/cm oder mehr (Methode ASTM D 256) aufweist.

14. Elektrisches Stromkabel, umfassend eine Isolationsschicht, die aus der Polyolefinharzzusammensetzung gemäß einem der Ansprüche 1 bis 13 hergestellt ist.

## Revendications

1. Composition résine de polyoléfine, comprenant (A) 70 à 95 % en poids d'un copolymère séquencé éthylène-propylène obtenu par polymérisation d'un homopolymère de propylène ou d'un copolymère statistique éthylène-propylène avec un copolymère de caoutchouc éthylène-propylène par étapes dans des réacteurs, et (B) 5 à 30 % en poids d'un copolymère de caoutchouc éthylène-propylène,
dans laquelle la température de transition vitreuse du composant caoutchouc du copolymère séquencé éthylène-propylène (A) apparaît entre -60 et -40 °C, mesuré par un analyseur mécanique dynamique, l'indice de fusion de la composition de résine polyoléfine mesuré à 230 °C sous une charge de 2,16 kg est de 0,5 à 6,0 g/10 minutes,
et la température de transition vitreuse des composants caoutchouc (A, B) dans la composition résine de polyoléfine apparaît entre -60 et -40 °C, mesuré par un analyseur mécanique dynamique.

2. Composition résine de polyoléfine selon la revendication 1, dans laquelle, lorsque le copolymère séquencé éthylène-propylène (A) est extrait à température ambiante avec un solvant xylène, la teneur en composant caoutchouc extrait est de 3 à 55 % en poids, de préférence de 5 à 45 % en poids.

3. Composition résine de polyoléfine selon la revendication 2, dans laquelle la viscosité intrinsèque du composant caoutchouc extrait est de 3,0 à 6,0 dl/g quand elle est mesurée dans un solvant décaline à 135 °C.

4. Composition résine de polyoléfine selon la revendication 1, dans laquelle le copolymère séquencé éthylène-propylène (A) présente une température de fusion (Tm) de 145 à 170 °C.

5. Composition résine de polyoléfine selon la revendication 1, dans laquelle l'indice de fusion du copolymère séquencé éthylène-propylène (A) mesuré à 230 °C sous une charge de 2,16 kg est de 0,5 à 8,0 g/10 minutes.

6. Composition résine de polyoléfine selon la revendication 1, dans laquelle la teneur en éthylène est de 5 à 25 % en poids, de préférence de 7 à 20 % en poids, et la teneur en propylène est de 75 à 95 % en poids, de préférence de 80 à 93 % en poids, dans le copolymère séquencé éthylène-propylène (A).

7. Composition résine de polyoléfine selon la revendication 1, dans laquelle la teneur en éthylène dans la résine de copolymère de caoutchouc éthylène-propylène est de 5 à 25 % en poids, de préférence de 8 à 20 % en poids.

8. Composition résine de polyoléfine selon la revendication 1, comprend en outre au moins un additif choisi dans le groupe consistant en un antioxydant et un agent neutralisant.

9. Composition résine de polyoléfine selon la revendication 8, dans laquelle la teneur en additif est de 0,2 à 0,5 % en poids, par rapport au poids total de la composition résine de polyoléfine.

10. Composition résine de polyoléfine selon la revendication 1, dans laquelle, lorsque la composition résine de polyoléfine est extraite à température ambiante avec un solvant xylène, la teneur en composant caoutchouc extrait est de 30 à 50 % en poids.

11. Composition résine de polyoléfine selon la revendication 10, dans laquelle la viscosité intrinsèque du composant caoutchouc extrait est de 2,5 à 5,0 dl/g quand elle est mesurée dans un solvant décaline à 135 °C.

12. Composition résine de polyoléfine selon la revendication 1, qui présente une température de fusion (Tm) de 145 à 170 °C.

13. Composition résine de polyoléfine selon la revendication 1, qui présente un module de flexion (méthode ASTM D 790) de 400 MPa ou moins, un allongement de 400 % ou plus (méthode IEC 60811-501) et une résistance aux chocs à -40 °C de 5 kgf cm/cm ou plus (méthode ASTM D 256).

14. Câble d'alimentation électrique comprenant une couche d'isolation préparée à partir de la composition de résine polyoléfine selon l'une quelconque des revendications 1 à 13.
